# EUROPEAN PATENT SPECIFICATION

(11) **EP 2 198 762 B1**
(45) Date of publication and mention of the grant of the patent: **10.08.2011**
(21) Application number: 09179854.6
(22) Date of filing: 18.12.2009
(51) Int. Cl.: A47J 43/10, A47J 31/44

(54) **Device for the preparation of hot beverages, in particular milk-based beverages such as cappuccino, chocolate and similar**
Vorrichtung zur Zubereitung von heissen Getränken, insbesondere Milchgetränken wie Cappuccino, Schokolade und ähnlichen
Dispositif pour la préparation de boissons chaudes, en particulier boissons à base de lait comme cappuccino, chocolat et similaires

(30) Priority: 19.12.2008 IT MI20082281
(43) Date of publication of application: 23.06.2010
(73) Proprietor: Lavazza S.P.A., 10154 Torino (IT)
(72) Inventor: Vanni, Alfredo, 17020 Magliolo (IT); Arcangeli, Marcello, 10145 Torino (IT); Viarizzo, Francesco, 10134 Torino (IT)
(74) Representative: Jorio, Paolo

(56) References cited:
- EP-A- 1 197 175
- DE-A1-102004 063 278
- DE-A1-102004 063 285
- DE-U1- 20 300 851

## Description

The present invention relates to a hot-beverage-making apparatus, in particular for milk beverages such as cappuccino, chocolate and similar. The apparatus is designed in particular for home use, in that it can also be manufactured in the form an accessory for conventional espresso coffee machines.

Numerous, even household, hot-beverage-making apparatuses are known. Document DE-102004063285 discloses a hot beverage making apparatus.

Also known, however, is the difficulty in making certain beverages, particularly cappuccino, of the same quality as those produced by professional operators.

Even when equipped with milk-frothing devices (typically steam dispensers), as required for a good cappuccino, household coffee machines rarely produce beverages of professional quality, on account of this mainly depending on the skill and experience of the operator.

At the present time, there would appear to be no apparatus that is quick and easy to use, even by inexperienced, non-professional users, and that provides for producing quality beverages comparable in all respects to those produced by professional operators on professional machines.

It is therefore an object of the present invention to provide a straightforward, practical, compact, highly efficient apparatus enabling even inexperienced users to produce beverages, including cappuccino, of superior quality in terms of consistency, creaminess and temperature.

According to the present invention, there is provided a hot-beverage-making apparatus, in particular for milk beverages such as cappuccino, chocolate and similar, as defined in general terms in the accompanying Claim 1, and in additional terms in the dependent Claims.

By virtue of the combined action of the mechanical stirrer and the steam wand, as well as other special design features, the apparatus according to the present invention provides for producing quality hot beverages, in particular hot milk beverages such as cappuccino, easily and efficiently, with no particular assistance, and therefore skill, on the part of the user.

The apparatus according to the present invention is also easy and relatively cheap to produce, comprises a small number of component parts, and is highly compact.

The apparatus according to the present invention can also be produced in the form of a separate accessory connectable to a conventional espresso coffee machine, to use the steam generated by the machine.

A non-limiting embodiment of the present invention will be described by way of example with reference to the accompanying drawings, in which:
Figure 1 shows an exploded view in perspective of a hot-beverage-making apparatus in accordance with the present invention;
Figure 2 shows a schematic longitudinal section of the Figure 1 apparatus connected to a coffee machine;
Figure 3 shows a schematic cross section, with parts removed for clarity, of a detail of the Figure 1 apparatus.

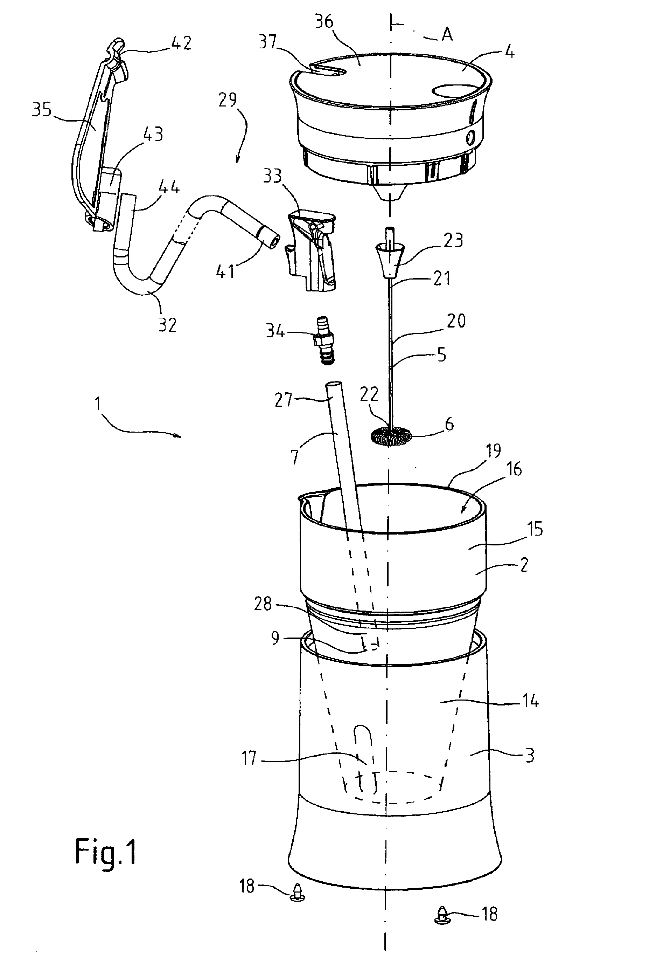

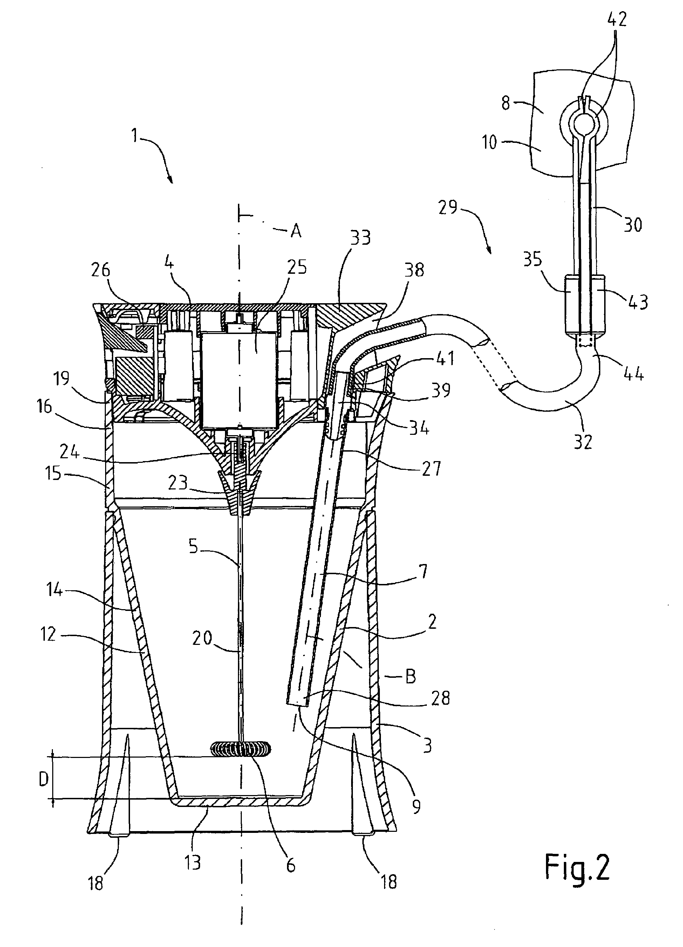

Number 1 in Figures 1 and 2 indicates as a whole a hot-beverage-making apparatus, in particular for milk beverages such as cappuccino, chocolate and similar.

Apparatus 1 in the following description is designed, in particular, for home use, by being made in the form of an accessory connectable to a known conventional espresso coffee machine (not shown, for the sake of simplicity). It is understood, however, that the apparatus according to the present invention may also be incorporated in an espresso coffee machine, and so forms part, as opposed to an accessory, of the machine.

Apparatus 1 comprises a container 2 extending, in use, along a substantially vertical axis A; a casing 3 housing container 2; a removable lid 4 closing container 2; a rotary mechanical stirrer 5 fitted on the end with an impeller 6; and a steam wand 7 connected to a steam source 8 and having an end steam outlet 9.

Container 2 is designed to contain a liquid (e.g. milk) from which to produce the desired beverage, and comprises a lateral wall 12 extending about axis A; and a bottom wall 13. Container 2 preferably, though not necessarily, converges towards bottom wall 13, e.g. is substantially truncated-cone-shaped, or comprises at least one truncated-cone-shaped processing portion 14. In the non-limiting example shown, the container comprises a processing portion 14 tapering towards bottom wall 13, i.e. a substantially truncated-cone-shaped portion; and a substantially cylindrical top portion 15 over portion 14 and having a top end 16 closed by lid 4.

Container 2 has a seat-sensitive indicator 17, e.g. a known heat-sensitive patch applied to lateral wall 12 to visually indicate (e.g. by changing colour) when a given temperature threshold is reached.

Casing 3 comprises a hollow body extending about axis A and removably housing container 2 so that lid 4 projects from the top of casing 3; and casing 3 is fitted at the bottom with vibration-damping feet 18.

Lid 4 fits onto a peripheral top end edge 19 of container 2 to close top end 16 of container 2.

Lid 4 supports stirrer 5 and wand 7, which project from lid 4 into container 2 and slope with respect to each other; and the end steam outlet 9 of wand 7 is located above and radially eccentric, i.e. positioned radially outwards, with respect to impeller 6 of stirrer 5.

Stirrer 5 rotates about a substantially vertical axis of rotation, is preferably located centrally inside container 2, and extends substantially along axis A of container 2, which also defines the axis of rotation of stirrer 5.

More specifically, stirrer 5 comprises a substantially straight stem 20, which in use extends along axis A between a drive end 21 and a free end 22 fitted with impeller 6. Drive end 21 is fitted with a joint 23 connected removably to a drive shaft 24 of a motor 25, e.g. an electric motor housed in lid 4 and controlled by an electronic card 26. For the sake of simplicity, the contacts, electric connections, power and control of motor 25 are not shown.

Motor 25 is designed so that the rotation speed of stirrer 5 immersed in a process liquid (milk or milk-based liquid) ranges roughly between 4500 and 5500 rpm, and preferably between roughly 4800 and 5000 rpm.

Impeller 6 is fitted to the free (bottom) end 22 of stem 20, and is located a given distance D, from bottom wall 13 of container 2, ranging roughly between 10 mm and 20 mm, and preferably of about 15 mm.

In the non-limiting example shown, impeller 6 is defined by a winding of metal wire wound into a toroidal spiral; and a straight portion of the metal wire forms stem 20.

Wand 7 extends substantially along an axis B sloping with respect to axis A.

In the example shown, wand 7 is substantially straight and slopes with respect to axis A and/or at least comprises a substantially straight portion sloping with respect to axis A. In the non-limiting example shown, wand 7 is defined by a straight tube having a connecting end 27, and a free end 28 opposite connecting end 27 and having outlet 9.

More specifically, wand 7 is fixed to lid 4, close to edge 19 of container 2, and projects into and slopes inwards of container 2.

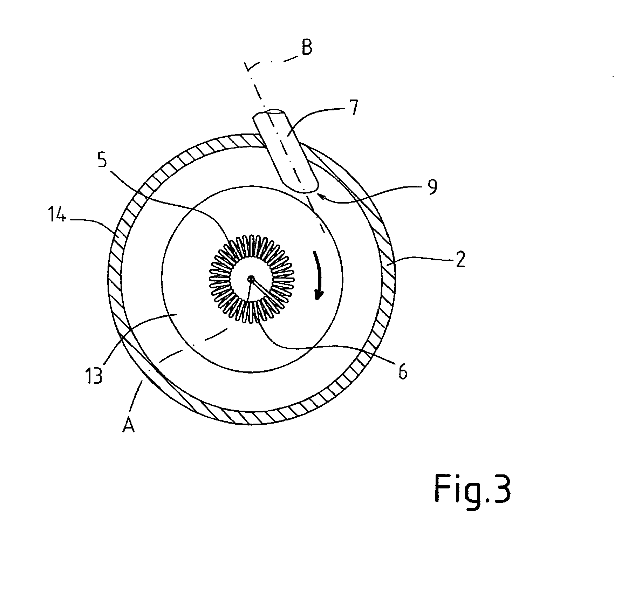

As shown schematically in Figure 3, wand 7 also slopes in the rotation direction of stirrer 5, and more specifically of impeller 6. In other words, wand 7 slopes both radially inwards of container 2, and circumferentially in the rotation direction of impeller 6.

By way of example, though not necessarily, wand 7 slopes with respect to (vertical) axis A by an angle of roughly 5-15°, and preferably of about 7-10°, and circumferentially by an angle of roughly 5-50°.

Wand 7 is connected by a releasable connecting system 29 to steam source 8, which advantageously forms part of a known espresso coffee machine 10, only a detail of which - namely, a steam nozzle 30 projecting from a wall of machine 10 - is shown.

More specifically, connecting system 29 comprises a steam supply pipe 32, preferably a hose; a connector 33 with an end fitting 34; and a support 35.

Connector 33 is fitted releasably to a peripheral edge 36 of lid 4. More specifically, connector 33 is designed to engage a seat 37 formed axially through lid 4, more specifically in peripheral edge 36 of lid 4, and has an inner through channel 38, into which steam supply pipe 32 is inserted, and which comprises a seat 39 housing end fitting 34. Connecting end 27 of wand 7, and a first end 41 of steam supply pipe 32 fit onto opposite ends of end fitting 34; and seat 39 slopes with respect to axis A so that wand 7, when fitted to end fitting 34 housed inside seat 39, also slopes with respect to axis A as described previously.

Support 35 has fasteners 42 for connection to nozzle 30, e.g. spring grips or clips that fit onto the outside of cylindrical pipes of various diameters; and a connector 43 for connecting nozzle hydraulically to a second end 44, opposite first end 41, of steam supply pipe 32.

In actual use, the liquid, e.g. milk, in container 2 is heated by steam from source 8, and at the same time stirred by stirrer 5. Steam is fed into container 2 by wand 7 connected to nozzle 30 by connecting system 29, and the outlet 9 of which is immersed in the liquid at least while stirrer 5 is rotated (which obviously raises the liquid level in container 2).

When the milk in container 2 reaches the right temperature, indicator 17 indicates (e.g. by changing colour) that processing can be stopped; and the user, after removing lid 4, can add the milk to other ingredients, e.g. to coffee made in known manner on machine 10, to obtain a cappuccino as required.

Clearly, changes may be made to the apparatus as described and illustrated herein without, however, departing from the scope of the accompanying Claims.

## Claims

1. A hot-beverage-making apparatus (1), in particular for milk beverages such as cappuccino, chocolate and similar, comprising a container (2) extending along an axis (A); a lid (4) closing the container (2); a rotary mechanical stirrer (5) fitted on the end with an impeller (6); and a steam wand (7) connectable to a steam source (8) and having an end steam outlet (9); **characterized in that** the stirrer (5) and the wand (7) extend, sloping with respect to each other, inside the container (2); and the end steam outlet (9) of the wand (7) is located above and radially eccentric with respect to the impeller (6) of the stirrer (5).

2. An apparatus as claimed in Claim 1, wherein the impeller (6) is located a given distance, ranging roughly between 10 mm and 20 mm, and preferably of about 15 mm, from a bottom wall (13) of the container (2).

3. An apparatus as claimed in Claim 1 or 2, wherein the stirrer (5) is powered by a motor (25) designed so that the rotation speed of the stirrer (5) immersed in a milk-based liquid ranges roughly between 4500 and 5500 rpm, and preferably between about 4800 and 5000 rpm.

4. An apparatus as claimed in one of the foregoing Claims, wherein the wand (7) slopes with respect to the axis (A).

5. An apparatus as claimed in one of the foregoing Claims, wherein the wand (7) is fixed to the lid (4), close to a peripheral edge (19) of the container (2), projects inside the container, and slopes inwards of the container.

6. An apparatus as claimed in one of the foregoing Claims, wherein the wand (7) also slopes in the rotation direction of the stirrer (5).

7. An apparatus as claimed in one of the foregoing Claims, wherein the stirrer (5) is positioned centrally inside the container (2), extends substantially along the axis (A) of the container, and rotates about a substantially vertical axis of rotation.

8. An apparatus as claimed in one of the foregoing Claims, wherein the stirrer (5) comprises a stem (20); and an impeller (6) on the bottom end of the stem.

9. An apparatus as claimed in one of the foregoing Claims, wherein the stirrer (5) and the wand (7) are fitted to the lid (4), and project from the lid into the container (2).

10. An apparatus as claimed in one of the foregoing Claims, comprising a connecting system (29) for releasable connection to a steam nozzle (30) of an espresso coffee machine; the wand (7) being connected to said connecting system (29).

11. An apparatus as claimed in one of the foregoing Claims, comprising a connector (33) having an end fitting (34), to which a connecting end (27) of the wand (7) and a first end (41) of a steam supply pipe (32) are connected.

12. An apparatus as claimed in Claim 11, wherein the connector (33) has a through channel (38) into which the steam supply pipe (32) is inserted, and which comprises a seat (39) housing the end fitting (34); the seat (39) sloping with respect to the axis (A) so that the wand (7), when fitted to the end fitting (34), also slopes with respect to the axis (A).

13. An apparatus as claimed in Claim 11 or 12, comprising a support (35), in turn comprising fasteners (42) for connection to a steam nozzle (30) of a coffee machine; and a connector (43) for connecting said steam nozzle (30) to a second end (44) of the steam supply pipe (32).

14. An apparatus as claimed in one of the foregoing Claims, wherein the container (2) has a bottom wall (13), converges towards said bottom wall, and in particular is substantially truncated-cone-shaped.

15. An apparatus as claimed in one of the foregoing Claims, wherein the container (2) has a heat-sensitive indicator (17), which indicates visually when a predetermined temperature threshold is reached.

## Patentansprüche

1. Vorrichtung (1) zum Zubereiten heißer Getränke, insbesondere Milchgetränken wie Capuccino, Schokolade oder dergleichen, umfassend einen Behälter (2), der sich entlang einer Achse (A) erstreckt, einen Deckel (4), der den Behälter (2) verschließt, einen mechanischen umlaufenden Rührer (5), der an seinem einen Ende einen Rotor (6) aufweist, einen Dampfstab (7), die an eine Dampfquelle (8) angeschlossen ist und einen Dampfauslass (9) aufweist,
**dadurch gekennzeichnet, dass** der Rührer (5) und der Stab (7) sich innerhalb des Behälters (2) erstrecken und gegeneinander geneigt sind, und dass der Dampfauslass (9) der Wand (7) oberhalb und radial exzentrisch in Bezug auf den Rotor (6) des Rührers (5) angeordnet ist.

2. Vorrichtung nach Anspruch 1, **dadurch gekennzeichnet, dass** der Rotor in einem vorgegebenen Abstand zum Boden (13) des Behälters (2) angeordnet ist, und dass der Abstand etwa zwischen 10 und 20 mm beträgt, vorzugsweise 15 mm.

3. Vorrichtung nach Anspruch 1 oder 2, **dadurch gekennzeichnet, dass** der Rührer (5) von einem Motor (25) angetrieben ist, der derart ausgelegt ist, dass die Umlaufgeschwindigkeit des Rührers (5), in eine Flüssigkeit auf Milchbasis eingetaucht, zwischen 4500 und 5500 Upm beträgt, vorzugsweise zwischen 4800 und 5000 Upm.

4. Vorrichtung nach einem der vorausgegangenen Ansprüche, **dadurch gekennzeichnet, dass** der Stab (7) in Bezug auf die Achse (A) geneigt ist.

5. Vorrichtung nach einem der vorausgegangenen Ansprüche, **dadurch gekennzeichnet, dass** der Stab (7) am Deckel (4) befestigt ist, nahe der Umfangskante (19) des Behälters (2), und in den Behälter hineinragt und innerhalb des Behälters geneigt ist.

6. Vorrichtung nach einem der vorausgegangenen Ansprüche, **dadurch gekennzeichnet, dass** sich der Stab (7) außerdem in Richtung des Rührers (5) neigt.

7. Vorrichtung nach einem der vorausgegangenen Ansprüche, **dadurch gekennzeichnet, dass** der Rührer (5) zentral innerhalb des Behälters (2) angeordnet ist, sich im Wesentlichen entlang der Achse (A) des Behälters erstreckt, und um eine im Wesentlichen vertikale Drehachse umläuft.

8. Vorrichtung nach einem der vorausgegangenen Ansprüche, **dadurch gekennzeichnet, dass** der Rührer (5) einen Schaft (20) und einen Rotor (6) am Bodenende des Schaftes aufweist.

9. Vorrichtung nach einem der vorausgegangenen Ansprüche, **dadurch gekennzeichnet, dass** der Rührer (5) und der Stab (7) am Deckel (4) montiert sind und sich vom Deckel in den Behälter (2) hineinerstrecken.

10. Vorrichtung nach einem der vorausgegangenen Ansprüche, umfassend ein Anschlusssystem (9) zum lösbaren Verbinden an eine Dampfdüse (30) einer Espresso-Kaffeemaschine, und dass der Stab (7) an das Anschlusssystem (29) angeschlossen ist.

11. Vorrichtung nach einem der vorausgegangenen Ansprüche, umfassend einen Konnektor (33) mit einem Endfitting (34), an welchem ein Anschlussende (27) des Stabes (7) und ein erstes Ende (41) einer Dampfzufuhrleitung (32) angeschlossen sind.

12. Vorrichtung nach Anspruch 11, **dadurch gekennzeichnet, dass** der Konnektor (33) einen Durchgangskanal (38) aufweist, in weiche die Dampfleitung (32) eingeführt ist, und der einen Sitz (39) zum Aufnehmen des Endfittings (34) aufweist, und dass der Sitz (39) im Bezug auf die Achse (A) sich verjüngt, sodass der Stab (7), wenn an das Endfitting (34) angeschlossen, sich ebenfalls in Bezug zur Achse (A) neigt.

13. Vorrichtung nach Anspruch 11 oder 12, umfassend eine Konsole (35), die ihrerseits Befestigungsmittel (42) zum Anschließen an eine Dampfdüse (30) einer Kaffeemaschine aufweist, und einen Konnektor (43) zum Anschließen der Dampfdüse (30) an ein zweites Ende (44) der Dampfzufuhrleitung (32).

14. Vorrichtung nach einem der vorausgegangenen Ansprüche, wobei der Behälter (2) einen Boden (13) aufweist, der zum Boden hin konvergiert, und vorzugsweise im Wesentlichen kegelstumpfförmig ist.

15. Vorrichtung nach einem der vorausgegangenen Ansprüche, **dadurch gekennzeichnet, dass** der Behälter (2) einen wärmesensitiven Indikator (17) aufweist, der bei Erreichen einer vorgegebenen Temperaturschwelle eine visuelle Anzeige abgibt.

## Revendications

1. Appareil de préparation de boissons chaudes (1), en particulier pour des boissons à base de lait telles qu'un cappuccino, un chocolat et similaires, comprenant un récipient (2) s'étendant le long d'un axe (A) ; un couvercle (4) fermant le récipient (2) ; un agitateur mécanique rotatif (5) équipé, sur l'extrémité, d'une roue à aubes (6) ; et un bras à vapeur (7) pouvant être raccordé à une source de vapeur (8) et possédant une sortie de vapeur d'extrémité (9) ; **caractérisé en ce que** l'agitateur (5) et le bras (7) s'étendent, en inclinaison l'un par rapport à l'autre, à l'intérieur du récipient (2) ; et la sortie de vapeur d'extrémité (9) du bras (7) est positionnée au-dessus de, et de façon radialement excentrique par rapport à, la roue (6) de l'agitateur (5).

2. Appareil selon la revendication 1, dans lequel la roue à aubes (6) est positionnée à une distance donnée, variant approximativement entre 10 mm et 20 mm, et de préférence d'environ 15 mm, à partir d'une paroi inférieure (13) du récipient (2).

3. Appareil selon la revendication 1 ou 2, dans lequel l'agitateur (5) est actionné par un moteur (25) conçu pour que la vitesse de rotation de l'agitateur (5), immergé dans un liquide à base de lait, varie approximativement entre 4500 et 5500 tr/min, et de préférence entre environ 4800 et 5000 tr/min.

4. Appareil selon une des revendications précédentes, dans lequel le bras (7) est incliné par rapport à l'axe (A).

5. Appareil selon une des revendications précédentes, dans lequel le bras (7) est fixé au couvercle (4), près d'un bord périphérique (19) du récipient (2), fait saillie à l'intérieur du récipient, et est incliné vers l'intérieur du récipient.

6. Appareil selon une des revendications précédentes, dans lequel le bras (7) est également incliné dans la direction de rotation de l'agitateur (5).

7. Appareil selon une des revendications précédentes, dans lequel l'agitateur (5) est positionné de façon centrale à l'intérieur du récipient (2), s'étend sensiblement le long de l'axe (A) du récipient, et tourne autour d'un axe de rotation sensiblement vertical.

8. Appareil selon une des revendications précédentes, dans lequel l'agitateur (5) comprend une tige (20) ; et une roue à aubes (6) sur l'extrémité inférieure de la tige.

9. Appareil selon une des revendications précédentes, dans lequel l'agitateur (5) et le bras (7) sont installés sur le couvercle (4), et font saillie à partir du couvercle dans le récipient (2).

10. Appareil selon une des revendications précédentes, comprenant un système de raccordement (29) pour le raccord libérable à une buse à vapeur (30) d'une machine à café expresso ; le bras (7) étant raccordé audit système de raccordement (29).

11. Appareil selon une des revendications précédentes, comprenant un raccord (33) possédant un accessoire d'extrémité (34), auquel une extrémité de raccordement (27) du bras (7) et une première extrémité (41) d'un tuyau d'alimentation en vapeur (32) sont raccordées.

12. Appareil selon la revendication 11, dans lequel le raccord (33) comporte un canal de passage (38) dans lequel le tuyau d'alimentation en vapeur (32) est inséré, et qui comprend un siège (39) logeant l'accessoire d'extrémité (34) ; le siège (39) étant incliné par rapport à l'axe (A) pour que le bras (7), lorsqu'il est installé sur l'accessoire d'extrémité (34), soit également incliné par rapport à l'axe (A).

13. Appareil selon la revendication 11 ou 12, comprenant un support (35), comprenant à son tour des éléments de fixation (42) pour le raccord à une buse à vapeur (30) d'une machine à café ; et un raccord (43) pour raccorder ladite buse à vapeur (30) à une seconde extrémité (44) du tuyau d'alimentation en vapeur (32).

14. Appareil selon une des revendications précédentes, dans lequel le récipient (2) comporte une paroi inférieure (13), converge vers ladite paroi inférieure, et en particulier présente une forme sensiblement tronconique.

15. Appareil selon une des revendications précédentes, dans lequel le récipient (2) comporte un indicateur sensible à la chaleur (17), qui indique visuellement l'instant auquel un seuil de température prédéterminé est atteint.
